# EUROPEAN PATENT SPECIFICATION

(11) **EP 4 548 126 B1**
(45) Date of publication and mention of the grant of the patent: **04.11.2026**
(21) Application number: 23735319.8
(22) Date of filing: 27.06.2023
(51) Int. Cl.: G01S 15/89, G01S 7/52

(54) **ULTRASOUND IMAGING APPARATUS**
ULTRASCHALLBILDGEBUNGSVORRICHTUNG
APPAREIL D'IMAGERIE À ULTRASONS

(30) Priority: 29.06.2022 EP 22181941
(43) Date of publication of application: 07.05.2025
(73) Proprietor: Danmarks Tekniske Universitet, 2800 Kongens Lyngby (DK)
(72) Inventor: THURMANN JØRGENSEN, Lasse, 2800 Kongens Lyngby (DK); ARENDT JENSEN, Jørgen, 2800 Kongens Lyngby (DK); STUART, Matthias Bo, 2800 Kongens Lyngby (DK)
(74) Representative: Guardian IP Consulting I/S
(86) International application number: PCT/EP2023/067438
(87) International publication number: WO 2024/003033

(56) References cited:
- WO-A1-2017/212313
- JORGENSEN LASSE THURMANN ET AL: "Tensor Velocity Imaging With Motion Correction", IEEE TRANSACTIONS ON ULTRASONICS, FERROELECTRICS, AND FREQUENCY CONTROL, IEEE, USA, vol. 68, no. 5, 21 December 2020 (2020-12-21), pages 1676 - 1686, XP011852301, ISSN: 0885-3010, [retrieved on 20210423], DOI: 10.1109/TUFFC.2020.3046101

## Description

### TECHNICAL FIELD

The following generally relates to ultrasound and more particularly to an ultrasound imaging apparatus, to a corresponding method, data processing system and computer program.

### BACKGROUND

High-frame-rate 3-D imaging with a broad volumetric coverage can be achieved using 2-D probes combined with synthetic aperture imaging. However, for most 2-D probe designs, the number of channels increases quadratically with the number of elements in the side-length of aperture. In practice, this makes it very difficult, if not impossible, from a manufacturing and processing standpoint to achieve a low F-number at large imaging depths. Furthermore, even small numbers of elements in the side-length of aperture result in a channel count far exceeding that of typical 2-D imaging apparatus.

Row-column addressed arrays (RCAs) provide a solution to the high channel count by addressing the elements of the 2-D array by rows and columns, and this reduces the total number of channels to scale linearly, rather than quadratically, with the number of elements in the side-length of aperture.

US 10,705,210 discloses an ultrasound imaging apparatus for three-dimensional imaging with a row-column addressed transducer array using synthetic aperture sequential beamforming. This prior art method applies fixed focusing to simplify the propagation paths of the soundwaves.

Row-column imaging with dynamic receive focusing is another approach to row-column imaging. Dynamic receive focusing models the sound waves propagation more accurately and most current ultrasound scanners use this approach in the imaging.

Row-column imaging with dynamic receive focusing is described in M. F. Rasmussen, T. L. Christiansen, E. V. Thomsen, and J. A. Jensen, "3-D imaging using row-column-addressed arrays with integrated apodization - Part I: Apodization design and line element beamforming," IEEE Trans. Ultrason., Ferroelec., Freq. Contr., vol. 62, no. 5, pp. 947-958, 2015.

L.Th. Jørgensen et al., "Tensor Velocity Imaging With Motion Correction", IEEE Transactions on ultrasonics, ferroelectrics, and frequency control, Vol. 66, No. 5, May 2021 presents a motion compensation procedure for improving the accuracy of synthetic aperture tensor velocity estimates for row-column arrays.

While row-column imaging with dynamic receive focusing has been found to provide a high image quality, this approach places a high demand on the processing unit. This is a particularly severe issue when volumetric images are to be acquired, as these usually contain a large number of image points. In particular, the high processing demands severely limit the pulse repetition frequency at which real-time imaging can be performed. However, many clinical applications, such as real-time flow applications, require high pulse repetition rates.

It thus remains desirable to provide an imaging apparatus that facilitates high pulse repetition frequencies such as for real-time volumetric beamforming while providing a high image quality.

In view of at least the foregoing, there is an unresolved need for an improved approach to row-column ultrasound imaging.

### SUMMARY

Various aspects disclosed herein seek to address the above and/or other matters or at least seek to provide an approach that may serve as an alternative to existing approaches.

According to one aspect, an ultrasound imaging apparatus is disclosed for providing a volumetric ultrasound image of an image volume as defined in appended claim 1. The term volumetric ultrasound image is intended to refer to a 3-D ultrasound image, which may be represented as a 3-D raster of image points, e.g. image points each having an image value associated with it.

Embodiments of the ultrasound imaging apparatus comprise:
a) a row-column addressed transducer array,
b) a beamformer module, and
c) a reconstruction module.

The row-column addressed transducer array is configured to convert excitation electrical pulses into an ultrasound pressure field and to convert received ultrasound echo pressure fields into echo signals. The beamformer module is configured to beamform the echo signals using dynamic receive focusing to produce respective image values at a first set of image points within the image volume.

The reconstruction module is configured to:
- determine a set of trajectories, each trajectory intersecting an image point of the first set of image points; each of the determined trajectories may be defined in dependence of a virtual emitter location, in particular by positions where a time-of-flight from a virtual emitter location and to a closest position on an aperture of a receiving one of the first and second transducer arrays is constant along said trajectory,
- map a second set of image points of the image volume onto the first set of image points, and to
- compute respective image values at the mapped image points of the second set of image points from the image values of the image points of the first set of image points, thereby obtaining a volumetric ultrasound image of the image volume.

The ultrasound imaging apparatus is configured to control the row-column addressed transducer array to make a plurality of ultrasonic emissions corresponding to ultrasound emitted from respective virtual emitter locations; wherein the beamformer module and the reconstruction module are configured to compute a plurality of low-resolution volumetric images, each low-resolution volumetric image corresponding to a respective virtual emitter location, and wherein the image apparatus further comprises an image combiner module configured to combine the plurality of low-resolution volumetric images corresponding to different virtual emitter locations into a combined high-resolution volumetric image having a spatial resolution higher that the low-resolution volumetric images.

Embodiments of the ultrasound imaging apparatus disclosed herein are capable of providing volumetric images that are indistinguishable from prior art row-column imaging methods with dynamic receive focusing, but with considerably fewer operations.

In prior art row-column imaging using dynamic receive focusing, the number of processing operations is proportional to the number of elements of the array times the number of image points. In embodiments of the approach used in the various aspects disclosed herein, the number of operations is proportional to just the number of image points. The inventors have realized that this reduction can be achieved because there are positions in the volume where the measured sound's time of flight to a closest position of the aperture is constant. As a result, the image value along these positions will be approximately constant as well. This means that imaging apparatus only needs to calculate the image value in one of those positions to get the image values for all the remaining positions. Various embodiments disclosed herein take advantage of this realization in 3-D imaging, thereby achieving a significant reduction in the number of processing operations, thereby facilitating real-time image acquisition at a higher pulse frequency. Real-time image acquisition at a high pulse frequency in turn facilitates a variety of applications, such as for clinical use. Examples of such applications include, but are not limited to anatomic imaging, super resolution imaging, contrast imaging, and velocity imaging, such as tensor velocity imaging.

The row-column addressed transducer array includes a plurality of transducer elements. The transducer elements may be configured to convert excitation electrical pulses into an ultrasound pressure field and to convert received ultrasound pressure fields (echoes) into an electrical (e.g., a radio frequency (RF)) echo signal. The echoes and, hence, the echo signals are generated in response to the transmitted pressure field interacting with matter, e.g., tissue, etc. The ultrasound imaging apparatus may thus comprise a transmit circuit configured to generate the excitation electrical pulses, in particular so as to cause the row-column addressed transducer array to an emission sequence of ultrasound pressure fields corresponding to respective virtual emitter locations.

The row-column transducer array includes a first set of transducer elements defining a first transducer array, in particular a first 1-D transducer array, along a first axis. Each transducer of the first transducer array may be elongated along a first longitudinal axis which may be orthogonal to the first axis. To this end, the transducers of the first transducer array may be formed as rows or columns of a 2-D array of transducer elements, where a single channel may be used to address the transducer elements of each row or column. Each column or each row may thus be addressable as a single elongated transducer of a 1-D array of transducers. The row-column transducer array includes a second set of transducer elements defining a second transducer array, in particular a second 1-D transducer array, along a second axis. Each transducer of the second transducer array may be elongated at a second longitudinal axis, which may be orthogonal to the second axis. To this end the transducers of the second transducer array may be formed as columns or rows of a 2-D array of transducer elements, where a single channel may be used to address the transducer elements of each column or row. The first axis may be orthogonal to the second axis. In particular, the row-column addressed array may define two elongated 1-D transducer arrays, one consisting of the row elements and another consisting of the column elements of a 2-D array of transducer elements.

In some embodiments, the imaging apparatus is configured to transmit ultrasound waves by the first transducer array and to receive backscattered ultrasound waves, i.e. echoes, by the second transducer array.

The reconstruction module determines trajectories in the image volume. This determination involves determination of trajectories along which the image values are constant or at least approximately constant. To this end, the reconstruction module determines a trajectory as a set of positions within the image volume where a time-of-flight from a virtual emitter location, via any one of the set of positions along the trajectory, to a closest position on an aperture of a receiving one of the first and second transducer arrays is constant along said trajectory, i.e. is the same for all positions of the set of position. Accordingly, the set of trajectories are trajectories of constant time of flight in respect of a virtual emitter location. The determination of the trajectories depends on the virtual emitter locations. Accordingly, the determination is made for a set of virtual emitter locations, resulting in a set of trajectories, each trajectory of the set corresponding to a different virtual emitter location. A representation of the resulting trajectories, and/or a representation of corresponding mappings of image coordinates of the second set of image points along a respective one of the determined trajectories onto the first set of image points, may be stored in memory and re-used for the creation of subsequent volumetric ultrasound images that utilize the same virtual emitter locations. To this end, in some embodiments, the reconstruction module is configured to map each image coordinate of the image volume onto an image point of the first set, and to store a representation of the mapped image coordinates. Accordingly, the reconstruction module may be configured to compute a plurality of volumetric images using the stored representation of the mapped image coordinates.

A volumetric ultrasound image obtained by means of an RCA based on echo signals corresponding to a single virtual emitter location provides limited spatial resolution, in particular along a direction of elongation of the receiving transducer elements. To increase spatial resolution, the imaging apparatus may be configured to control the row-column addressed transducer array to make an emission sequence including a plurality of ultrasonic emissions corresponding to ultrasound emitted from respective virtual emitter locations. The virtual emitter locations may be distributed along the direction of elongation of the individual receiving transducer elements and/or distributed at different distances from the array. The beamformer module and the reconstruction module may thus be configured to compute a plurality of low-resolution volumetric images (LRVs), each low-resolution volumetric image corresponding to a respective virtual emitter location. The image apparatus may further comprise an image combiner module configured to combine the plurality of low-resolution volumetric images corresponding to different virtual emitter locations into a combined high-resolution volumetric image (HRV) having a spatial resolution which, at least along one spatial direction, is higher that the corresponding resolution of the low-resolution volumetric images. Combining may include computing image values of the high-resolution volumetric image as sums, or weighted sums, of image values at the same image point of the respective low-resolution volumetric image.

Various embodiments of the method disclosed herein thus perform dynamic receive focusing along all three spatial axes. In particular, dynamic receive focusing along the direction of elongation of the receiving transducer elements, i.e. the second axis of elongation, may be achieved by combining low-resolution volumetric images acquired for different virtual emitter locations.

To this end, the beamformer module is configured to beamform echo signals provided by the transducer array in response to ultrasound echoes received by the row-column addressed transducer array responsive to the emissions to produce a corresponding plurality of two-dimensional images, each two-dimensional image corresponding to one of the virtual emitter locations. The reconstruction module is then configured to compute at least a first low-resolution volumetric image of the plurality of low-resolution volumetric images, the first low-resolution image corresponding to a first virtual emitter location. To this end, the reconstruction module is configured to perform an interpolation. The construction module computes at least the first low-resolution volumetric image by at least:
- determining a first set of trajectories associated with the first virtual emitter location,
- mapping image coordinates of the image volume onto image positions of the first two-dimensional image using the first set of trajectories, and
- interpolating the image values at the mapped image coordinates from the image values of the first two-dimensional image plane, the interpolated image values at the mapped image coordinates representing the first low-resolution volumetric image.

The beamformer module may be configured to perform delay-and-sum beamforming to compute the image values at the first set of image points. Beamforming the echo signals using dynamic receive focusing generally comprises applying respective delays to the responses of the individual receiving transducer elements originating from the image point, and coherently adding these delayed responses. The delays are found from the round trip time-of-flight (TOF), which is the propagation time of the emitted wave from the transmit origin, i.e. from the virtual source location, to the image point and return to one of the transducer elements of the receiving transducer array. Accordingly, beamforming may comprise computing a time-of-flight for each virtual emitter location and for each image point of the first set of image points. In particular, a new set of delay values are, thus, calculated for each image point. Hence, beamforming the echo signals using dynamic receive focusing comprises computing a time-of-flight along a shortest path from the virtual emitter location to the image point and further from the image point to a receiving transducer element, or receiving aperture, of the row-column addressed transducer array, e.g. as described in M. F. Rasmussen, T. L. Christiansen, E. V. Thomsen, and J. A. Jensen, "3-D imaging using row-column-addressed arrays with integrated apodization - Part I: Apodization design and line element beamforming," IEEE Trans. Ultrason., Ferroelec., Freq. Contr., vol. 62, no. 5, pp. 947-958, 2015 or in Stuart et al., "Real-time volumetric synthetic aperture software beamforming of row-column probe data," IEEE Trans. Ultrason., Ferroelec., Freq. Contr., April 8, 2021, the time of flight associated with a virtual emitter location and with an image point may be computed from a path length of a shortest path extending from the virtual emitter location to the image point and from the image point to a receiving transducer element of the second transducer array, in particular to a position closest to the image point, along the elongated receiving transducer element.

The first set of image points may define a two-dimensional image surface, preferably an image plane, in the image volume, i.e. all image points of the first set of image points may lie on the two-dimensional image surface. Accordingly, the image values of the image points of the first set of image points may represent a two-dimensional image. The two-dimensional image may be considered as a 2-D projection of the image volume onto the two-dimensional image surface, the projection being defined by the trajectories. The two-dimensional image surface may be chosen such that all image points in the image volume may be mapped, in particular projected, onto the two-dimensional image surface by the set of trajectories. The second set of image points includes image points displaced from the two-dimensional image surface. It will be appreciated that the second set of image positions may further include the first set of image points, which may thus be considered being mapped onto themselves. Accordingly, the image values at the second set of image points represent a volumetric ultrasound image of the image volume.

The image plane may extend orthogonally to a longitudinal direction of the receiving transducer elements. The image plane may extend out of, in particular orthogonally, the plane defined by the transducer array. In one embodiment, the position of the image plane along the longitudinal direction of the receiving transducer elements corresponds to, in particular is equal to, the position of the virtual emitter location along said longitudinal direction of the receiving transducer elements.

The beamformer module may be configured to compute image values at image points distributed across the two-dimensional image surface, in particular the image plane, at a suitable, e.g. predetermined, sampling rate or raster density. The sampling rate may be uniform or it may vary across the image plane, e.g. may be larger along one direction than the other. In some embodiments, the ultrasound imaging apparatus is configured to sample the beamformed image plane, at least along a direction extending out of a plane defined by the transducer array, at at least the Nyquist frequency, thereby facilitating accurate interpolation by the reconstruction module.

The apparatus may include one or more processing units programmed or otherwise configured to implement the beamformer module and/or the reconstruction module and/or the combiner module. The one or more processing units may include a central processing unit (CPU), a graphics processing unit (GPU), a microprocessor, and/or the like. The beamformer module and the reconstruction module may be implemented by the same processing unit or by separate processing units.

In some embodiments, the imaging apparatus includes a probe and a console operatively coupled to the probe. The probe includes the row-column addressed transducer array and the console may include the processing unit implementing the beamformer module and/or the reconstruction module and/or the combiner module. In some embodiments some of the signal processing, e.g. some or all of the beamforming operation may be performed by a processing unit included in the probe.

In some embodiments, the imaging apparatus includes transmit circuitry configured to generate the excitation electrical pulses that excite the transducer elements and receive circuitry configured to receive and, optionally, condition and/or preprocess the electrical, e.g. RF, signals produced by the transducer elements. The transmit and/or receipt circuitry may be included in the console.

In some embodiments, the processing unit is configured to implement a processing pipeline that processes the received electrical signals, in particular the received RF signals, to create a representation of one or more volumetric ultrasound images.

The same and/or a separate processing unit may be configured to implement additional processing of the one or more of volumetric ultrasound images, e.g. for velocity imaging and/or another type of 3-D ultrasound imaging.

It will be appreciated that the creation of the one or more ultrasound images from the received electrical signals and the optional further processing may be implemented by a single processing unit. Alternatively, the different acts may be distributed between multiple processing units. In some embodiments, the processing unit(s) implementing the signal and/or image processing are included in the console. In some embodiments, at least some of the signal processing and/or subsequent image processing may be implemented by a computing apparatus separate from the console. With this embodiment, RF signals stored in memory and/or beamformed images stored in memory of the computing apparatus or received from the console (e.g. via a suitable wired or wireless connection) can be loaded and processed by an image processing pipeline to generate the resulting 3-D images.

The imaging apparatus may further include a display and be configured to display a representation of the generated volumetric images. The display may be included in the console or in a separate computing apparatus.

In another aspect, a method, in particular a computer-implemented method as defined in appended claim 11.

In yet another aspect, a computer program includes instructions that when, executed by a computer or other data processing system, cause the computer or other data processing system to perform the computer-implemented acts of the method described herein. The computer program may be implemented as a computer-readable storage medium storing the instructions or as a data signal encoding the instructions.

According to another aspect, disclosed herein are embodiments of a data processing system configured to perform the acts of the method described herein. In particular, the data processing system may have stored thereon program code adapted to cause, when executed by the data processing system, the data processing system to perform the steps of the method described herein. The data processing system may be embodied as a single computer or as a distributed system including multiple computers, e.g. a client-server system, a cloud based system, etc. Those skilled in the art will recognize still other aspects of the present application upon reading and understanding the attached description.

### BRIEF DESCRIPTION OF THE DRAWINGS

Various aspects disclosed herein will be illustrated by way of examples and not limited by the figures of the accompanying drawings, in which like references indicate similar elements and in which:
FIG. 1 diagrammatically illustrates an example of an imaging apparatus, in accordance with an embodiment(s) herein.
FIG. 2 schematically illustrates a row-column addressed transducer array in accordance with an embodiment disclosed herein.
FIGs. 3A and 3B schematically illustrate a coordinate system defined in respect of a row-column addressed transducer array in accordance with an embodiment disclosed herein.
FIG. 4 diagrammatically illustrates an example processing pipeline of the imaging apparatus of FIG. 1, in accordance with an embodiment described herein;
FIGs. 5A-C schematically illustrate an example of a time-of-flight path used in RCA delay-and-sum beamforming in accordance with an embodiment disclosed herein.
FIG. 6 schematically illustrates how elements along the y'-axis are effectively synthesized in accordance with an embodiment disclosed herein.
FIG. 7 illustrates an example method in accordance with an embodiment herein.
FIGs. 8A-C illustrate examples of low-resolution volumetric images and of a combined high-resolution volumetric image.
FIGs. 9A-B shows an output comparison between a conventional DAS RCA beamformer and an embodiment of the imaging apparatus and method disclosed herein.
FIGs. 10A-B show a 3-D rendering of the cyst phantom of FIGs. 9A-B beamformed with a conventional DAS RCA beamformer and an embodiment of the imaging apparatus and method disclosed herein.
FIG. 11 shows a comparison of computation time as a function of the number of samples and channels in the receiving aperture.

### DETAILED DESCRIPTION

The following describes an ultrasound imaging apparatus and associated method for providing a volumetric ultrasound image of an image volume and a corresponding method that mitigate one or more of the above-noted shortcomings of prior art volumetric imaging approaches. Generally, the ultrasound imaging apparatus comprises:
a) a row-column addressed transducer array configured to convert excitation electrical pulses into an ultrasound pressure field and to convert received ultrasound echo pressure fields into echo signals,
b) a beamformer module configured to beamform the echo signals using dynamic receive focusing to produce respective image values at a first set of image points within the image volume, in particular image points on an image plane within the image volume;
c) a reconstruction module configured to:
   - determine a set of trajectories, each trajectory intersecting an image point of the first set of image points,
   - map a second set of image points of the image volume onto the first set of image points, in particular image points outside the image plane, and to
   - compute respective image values at the mapped image points of the second set of image points from the image values of the image points of the first set of image points, thereby obtaining a volumetric ultrasound image of the image volume.

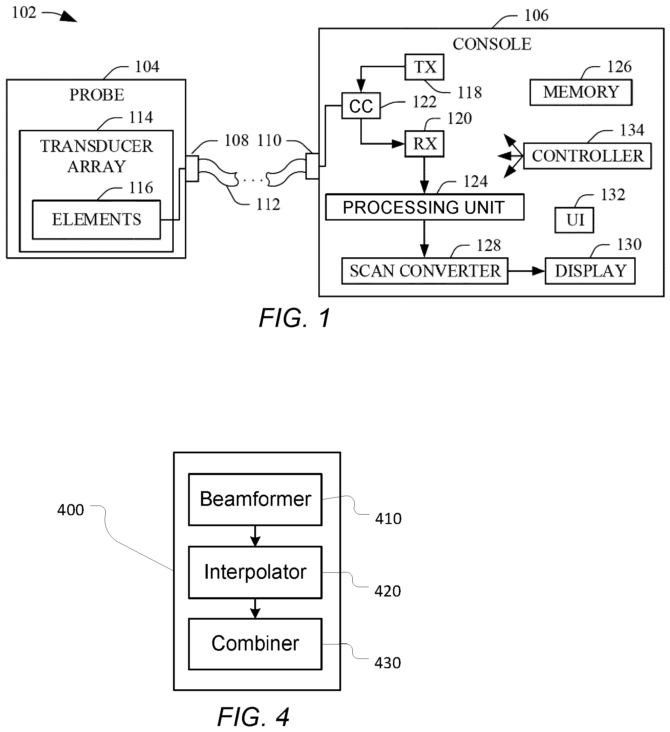

FIG. 1 illustrates an example imaging apparatus 102 configured for volumetric ultrasound imaging of a subject. The imaging apparatus 102 includes a probe 104 and a console 106, which interface with each other through suitable complementary hardware (e.g., electromechanical connectors 108 and 110 and a cable 112 as shown, etc.) and/or a wireless interface (not visible).

The probe 104 includes a row-column addressed transducer array (RCA) 114 with a plurality of transducer elements 116. The transducer array 114 includes a planar, curved or otherwise shaped, a fully populated or sparse, etc. array. The transducer elements 116 are configured to convert excitation electrical pulses into an ultrasound pressure field and to convert received ultrasound pressure fields (echoes) into an electrical (e.g., a radio frequency (RF)) echo signal. The echo signals are thus generated in response to the transmitted pressure field interacting with matter, e.g., human tissue other biological or non-biological material, etc. The transducer elements of the RCA are arranged in a 2-D array.

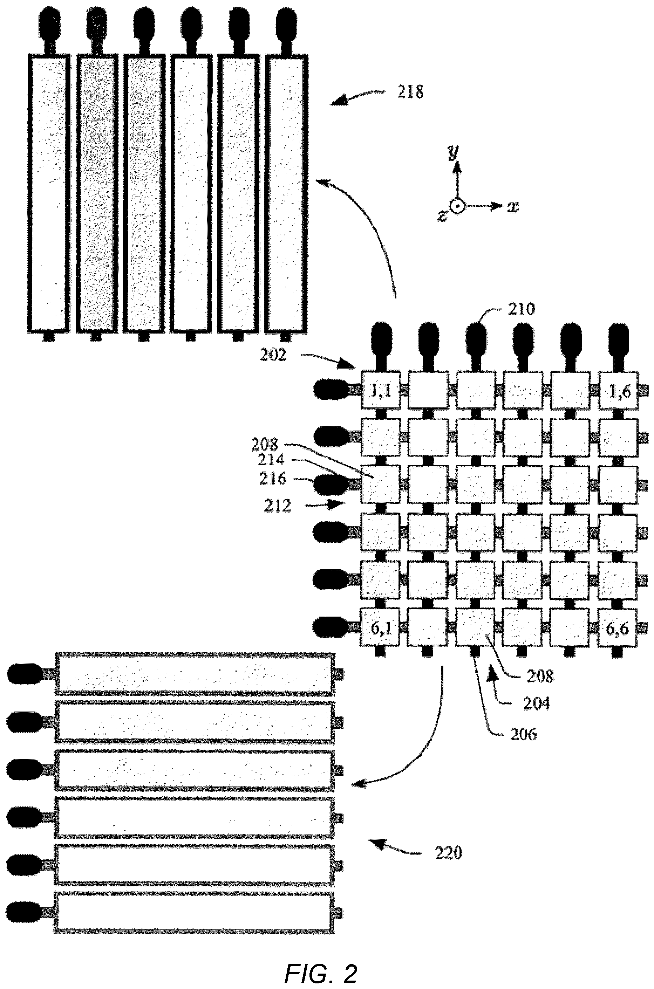

The console 106 includes transmit circuitry (TX) 118 configured to generate the excitation electrical pulses that excite the transducer elements 116 and receive circuitry (RX) 120 configured to receive the RF signals produced by the transducer elements 116. In one embodiment, the RX 120 (or other circuitry) is configured to also condition or preprocess the RF signal, e.g., amplify, digitize, etc. In the illustrated embodiment, a TX/RX controller 122 is configured to control the TX 118 and RX 120 for transmit and receive operations of the RCA. The TX 118 and RX 120 address the transducer elements of the RCA by row and columns, respectively. To this end, the signal received along the rows or columns is summed to create one signal per row or column. The RCA 114 thus effectively forms two orthogonal 1-D arrays with elongated transducer elements, e.g. as described in connection with FIG. 2.

In one embodiment, the TX 118 and RX 120 are controlled to cause the RCA to perform volumetric imaging by transmitting with one of the 1-D arrays and receiving the backscattered signal with the other 1-D array or with the same 1-D array. For example, a subset (i.e. one or a subgroup) of the elements of the transmitting array can be excited to simultaneously produce pressure fields that together emit a focused beam corresponding to an emission from a virtual emitter location, in particular a virtual line emitter. All or a subset of the elements of the receiving array can be used to receive echoes. This can be repeated for multiple different subsets of emitting arrays and, in particular, for different locations of the virtual emitter, where each emission/reception provides data to generate a low-resolution volumetric image, and a high-resolution volumetric image can be generated by combining multiple low-resolution images corresponding to different virtual emitter locations as described herein. An example of a suitable sequence is described in Jensen et al., "Synthetic aperture ultrasound imaging," Ultrasonics, vol. 44, pp. e5-e15, 2006. Another example using plane waves is mentioned in Tanter et al., "Ultrafast imaging in biomedical ultrasound, IEEE Transactions on Ultrasonics, Ferroelectrics, and Frequency Control, 2014, 61, 1, pp. 102-119.

The console 106 further includes a processing unit 124. The processing unit 124 can include one or more processors (e.g., a central processing unit (CPU), graphics processing unit (GPU), a microprocessor, etc.) configured to execute computer-readable instructions encoded or embedded on a computer-readable storage medium such as memory 126 to perform the computer-implemented acts described herein. In general, the processing unit 124 is configured to process the RF signals to create a set of low-resolution volumetric ultrasound images and to combine the low-resolution volumetric ultrasound images to generate a high-resolution volumetric ultrasound image. In particular, the processing unit 124 is configured to implement a processing pipeline including a beamformer module, a reconstruction module and a combiner module as described herein.

As described in greater detail below, in one instance the processing unit 124 implements a beamformer module, a reconstruction module and a combiner module. The beamformer module beamforms the received echo signals so as to produce beamformed low-resolution image planes, which correspond to different virtual emitter locations. The reconstruction module computes a low-resolution volumetric image from each of the beamformed low-resolution image planes. To this end, the reconstruction module determines, for each low-resolution image, trajectories of at least approximately constant image values, the trajectories intersecting the beamformed low-resolution image plane, maps image coordinates of the image volume onto the beamformed low-resolution image plane using the determined trajectories, and to interpolate the image values at the mapped image coordinates from the image values of the beamformed low-resolution image plane, thereby obtaining a low-resolution volumetric ultrasound image. The combiner module combines the resulting plurality of low-resolution volumetric ultrasound images corresponding to different virtual emitter locations into a combined high-resolution volumetric ultrasound image.

The console 106 may further include a scan converter 128 and a display 130. The scan converter 128 is configured to scan convert each image for display, e.g., by converting the images to the coordinate system of the display 130. A representation of a high-resolution volumetric ultrasound image is then displayed, e.g. a 3D rendering, a cross-section or another type of representation. Alternatively or additionally to displaying a representation of the generated high-resolution volumetric ultrasound image, the high-resolution volumetric ultrasound image may be stored and/or further processed, e.g. so as to identify and/or classify structures or properties of the subject being imaged.

The console 106 further includes a user interface 132, which includes one or more input devices (e.g., a button, a touch pad, a touch screen, etc.) and one or more output devices (e.g., a display screen, a speaker, etc.). The console 106 further includes a controller 134 configured to control one or more of the transmit circuitry 118, the receive circuitry 120, the TX/RX controller 122, the processing pipeline 124, the scan converter 128, the display 130, and/or the user interface 132.

It will be appreciated that other embodiments of an imaging apparatus may include alternative or additional components and/or the components may be arranged in a different manner and/or some components may be omitted. For example, the distribution of components between the probe and the console may be different, or the apparatus may include an additional remote data processing system.

FIG. 2 schematically illustrates a row-column addressed transducer array in accordance with an embodiment disclosed herein. In particular, FIG. 2 schematically illustrates an example 6x6 RCA array 202 (N=6). Each column 204 includes an electrically conductive trace 206 in electrical communication with each element 208 of the column 204, with an electrode 210 in electrical communication with the electrically conductive trace 206. Each row 212 includes an electrically conductive trace 214 in electrical communication with the elements 208 of the row 212, with an electrode 216 in electrical communication with the electrically conductive trace 214. The RCA effectively transforms the 36-element 6x6 2-D array 202 into a 6-element 1-D column array 218 and an orthogonal 6-element 1-D row array 220. This effectively reduces the number of element channels from N² to 2N.

Suitable RCA arrays are described in US 10,302,752 and US 10,806,432.

Furthermore, the transducing elements 208 may include integrated apodization, which may be identical or different for the individual elements. An example is described in WO 2015/092458. Furthermore, the 2-D array 202 may have flat 1-D arrays, one curved 1-D array, two curved 1-D arrays, a single curved lens in front of or behind one of the 1-D arrays, a double curved lens in front of or behind the 1-D arrays, a combination of at least one curved 1-D array and at least one curved lens, etc. An example is described in WO 2017/212313.

In FIG. 2, each row and column may have its own front-end circuit. For example, the electrode 210 is in electrical communication with its own front-end circuit (not visible), and the electrode 216 is in electrical communication with its own front-end circuit (not visible). In a variation, pairs of rows and columns may share front-end circuit, as described in US 10,806,432. With a shared front-end circuit, the electrodes 210 and 216 are both in electrical communication with a same switch (not visible), which switches between the electrodes 210 and 216 for transmitting and receiving. The switch can be part of the shared front-end circuit and/or separate therefrom. This configuration further reduces the number of channels from 2N to N.

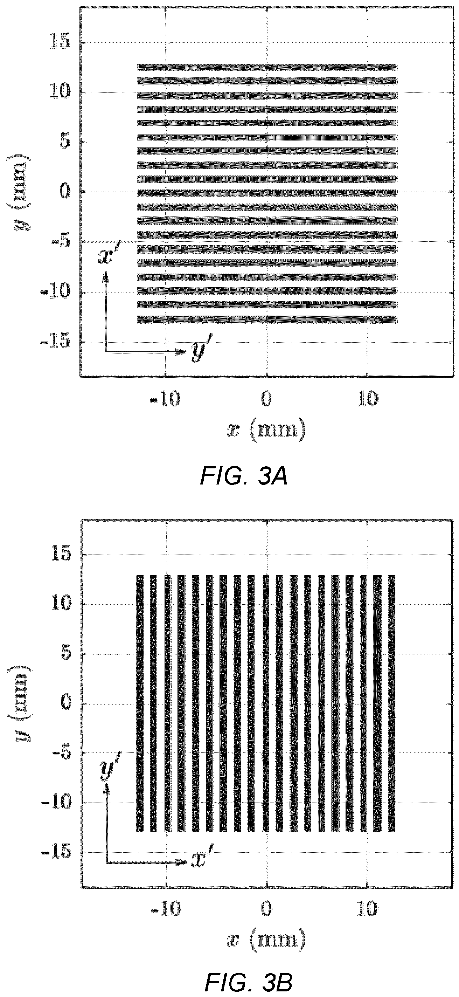

FIGs. 3A and 3B schematically illustrate a coordinate system defined in respect of a row-column addressed transducer array in accordance with an embodiment disclosed herein. As will be appreciated the rows of the RCA may be used to isonify the volume to be imaged and the columns may be used to receive the backscattered signal, or vice versa, i.e. the columns of the RCA may be used to isonify the volume to be imaged and the rows may be used to receive the backscattered signal. For the purpose of ease of presentation, it is therefore convenient to introduce a coordinate system relative to the receiving aperture. It will of course be appreciated that other coordinate systems may be used instead. For the purpose of the present description, the coordinate system is defined such that x' denotes the axis along which the elements of the receiving array are arranged and y' denotes the direction of elongation of the individual receiving elements.

Note that if an *(x, y)*-coordinate system is defined as illustrated in FIG. 2, i.e. such that the rows of the array extend along the x-axis and the columns extend along the *y*-axis, then *(x'; y')* = *(y; x)* if the row aperture receives, and *(x'; y')* = *(x; y)* if the column aperture receives, as illustrated in FIGs. 3A-B. In particular, FIG. 3A illustrates the *(x'*, *y'*)-coordinate system when the row aperture receives while FIG. 3B illustrates the *(x',y')*-coordinate system for the case where the column aperture receives. In any case, the *z*-direction is the direction extending orthogonally out of the plane of the array, i.e. orthogonally to the *(x',y')*-plane, and the origin of the coordinate system is defined in the center of the array.

FIG. 4 diagrammatically illustrates a non-limiting example of a processing pipeline, generally designated 400, implemented by an embodiment of the imaging apparatus disclosed herein, e.g. by the processing unit 124 of the imaging apparatus of FIG. 1. The illustrated processing pipeline 400 receives, as input, the RF signals from the receive circuitry 120, and outputs one or more volumetric ultrasound images.

The illustrated processing pipeline 400 includes a beamformer module 410. The beamformer module 410 is configured to beamform the RF signals onto an image plane and to output a series of 2-D images, each associated with a respective virtual emitter location. A non-limiting example of suitable beamforming is described in M. F. Rasmussen, T. L. Christiansen, E. V. Thomsen, and J. A. Jensen, "3-D imaging using row-column-addressed arrays with integrated apodization - Part I: Apodization design and line element beamforming," IEEE Trans. Ultrason., Ferroelec., Freq. Contr., vol. 62, no. 5, pp. 947-958, 2015. Another non-limiting example is described in Stuart et al., "Real-time volumetric synthetic aperture software beamforming of row-column probe data," IEEE Trans. Ultrason., Ferroelec., Freq. Contr., April 8, 2021. Other beamforming approaches are contemplated herein.

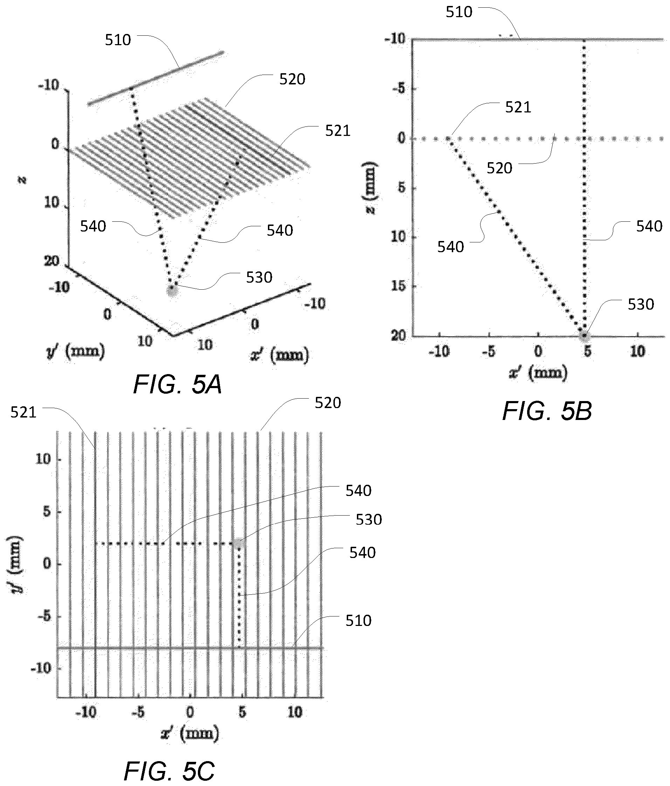

To this end, the transducer array is controlled to make an ultrasound emission corresponding to an emission from a virtual emitter located at a virtual emitter location. For each emission, some or all of the elements of the emitting array are controlled to emit ultrasound signals at appropriate phase shifts so as to create ultrasonic wave fronts appearing to originate from a virtual emitter location. The RCA is controlled to make a series of emissions corresponding to different locations of the virtual emitter, in particular different locations along the *y'*- and/or *z-*direction. For each emission, the elements of the receiving array receive the backscattered signal from the isonified volume and, for each emission, the beamformer module creates a corresponding 2-D image associated with said emission, i.e. for each virtual emitter location. To this end, the beamformer defines an image plane, which may be the same or a different plane for each emission. The image plane may be defined parallel to the *(x',z)*-plane, at a suitable location along the *y'*-axis, e.g. at the *y'*-location of the corresponding virtual emitter. For each image point on the image plane, the beamformer module performs a beamforming calculation to compute an image value at said image point. The image points may be distributed as a suitable raster across the image plane. The spatial density or sampling rate of the image points may be the same or different along the *x'-* and z-directions. The beamforming process involves, for each virtual emitter location and for each image point, a time-of-flight computation. Using dynamic receive focusing, the beamforming process considers the time-of-flight for traveling the distance from the virtual emitter location to the image point and back, in particular directly back on a shortest path, to the receiving element, as illustrated in FIGs. 5A-C.

FIGs. 5A-C schematically illustrate an example of a time-of-flight path used in RCA delay-and-sum beamforming in accordance with an embodiment disclosed herein. In particular, FIGs. 5A-C show locations of a receiving transducer element 521 of a receiving array 520, an image point 530 and a virtual emitter 510, seen from different directions. FIG. 5A illustrates a 3-D view, while FIG. 5B illustrates a side view along the *y'*-direction and FIG. 5C illustrates a top view along the *z-*direction.

Since the elements of the emitting arrays are elongated along the *x'*-direction, the virtual source 510 is a line extending along the *x'*-direction, as illustrated in FIGs. 5A-C.

In the *(x',y',z)*-coordinate system, the location of the virtual emitter 510 will be denoted *(x', yᵥ, zᵥ),* and the location of the image point 530 will be denoted *p̅ =(xₚ, yₚ, zₚ).* The path from the virtual emitter 510 via the image point and to the receiving element 521 at *(xₑ, y', 0)* is illustrated by dotted line 540.

The total path from a reference point on the array to the virtual emitter, from the virtual emitter to the image point and back from the image point to a receiving element may thus be given as $d \left(\vec{p}, {x}_{e}\right) = \left\{\begin{matrix}{z}_{v} - {d}_{v} + {d}_{e} & if {z}_{p} < {z}_{v} \\ {z}_{v} + {d}_{v} + {d}_{e} & otherwise\end{matrix}\right.$ (1) where ${d}_{v} = \sqrt{{\left({y}_{p}-{y}_{v}\right)}^{2} + {\left({z}_{p}-{z}_{v}\right)}^{2}} , and {d}_{e} = \sqrt{{\left({x}_{p}-{x}_{e}\right)}^{2} + {z}_{p}^{2}} .$

The time-of-flight (ToF) used by the beamformer module for the RCA Delay-and-sum (DAS) beamforming is thus given by *t = d*(*p̅, xₑ*)/*c*, where c is the speed of sound in the medium being imaged.

The illustration of the ToF path in FIG. 5B also shows that the focusing in the *zx'*-plane is similar to that of 2-D plane wave imaging, see e.g. G. Montaldo, M. Tanter, J. Bercoff, N. Benech, and M.

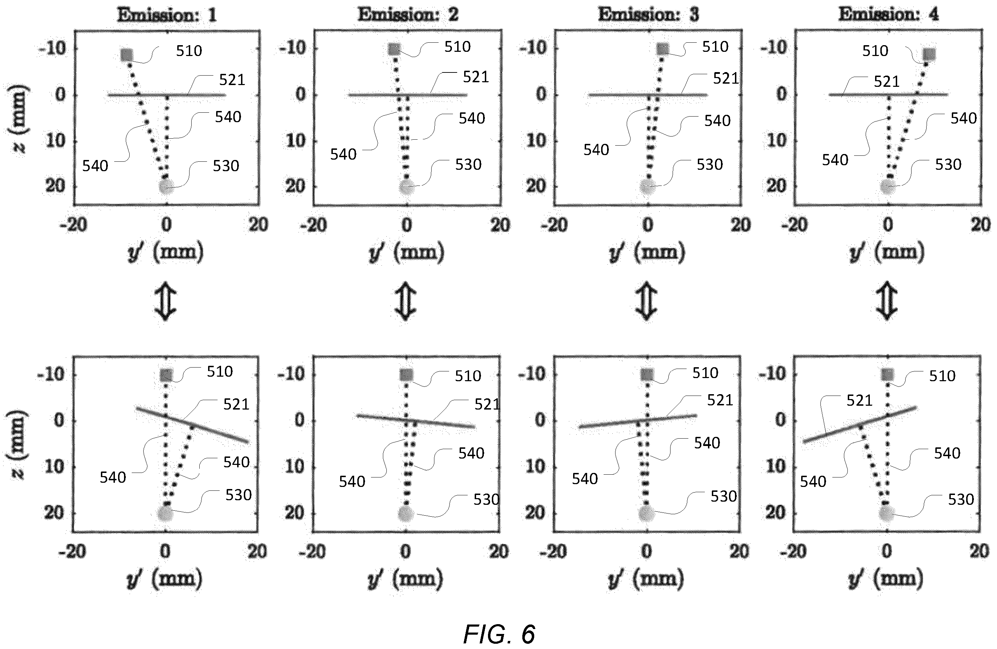

Fink, "Coherent plane-wave compounding for very high frame rate ultrasonography and transient elastography," IEEE Trans. Ultrason., Ferroelec., Freq. Contr. , vol. 56, pp. 489-506, March 2009. It will thus be appreciated that, in various embodiments described herein, dynamic receive focusing is achieved in the *x-* and *z'*-dimension. In fact, dynamic receive focusing is also achieved along the *y'*-axis, even though there is only one receiving element along this direction. To achieve dynamic receive focusing along the *y'*-axis, various embodiments disclosed herein combine images acquired from different virtual emission sources, located at different locations in the *zy*'-plane. The RCA is able to change the virtual emitter location in the *y'z*-plane by using different oriented apertures in transmit and receive, and the RCA is able to resolve objects in elevation, because it can change the virtual emitter location in this direction, as illustrated in FIG. 6.

FIG. 6 Illustrates how elements along the *y'*-axis are effectively synthesized according to various embodiments disclosed herein. FIG. 6 includes two rows of diagrams. The top row of diagrams illustrates ToF paths 540 for a fixed image point 530 and fixed receiving element 521, but for different locations of the virtual emitter 510. The bottom row illustrates that the emissions with different virtual emitter locations corresponds to emissions from a fixed virtual emitter location 510, but with the receiving element 521 moved along the *y'*-axis instead. This demonstrates that moving the emission source along *y'*-axis is effectively the same as receiving the emission source from different elements along the *y'*-axis. Combined, the different emissions synthesize a larger receiving aperture, thus providing focusing along the *y'*-axis. Therefore, the present method may be denoted "synthetic aperture" (SA) imaging.

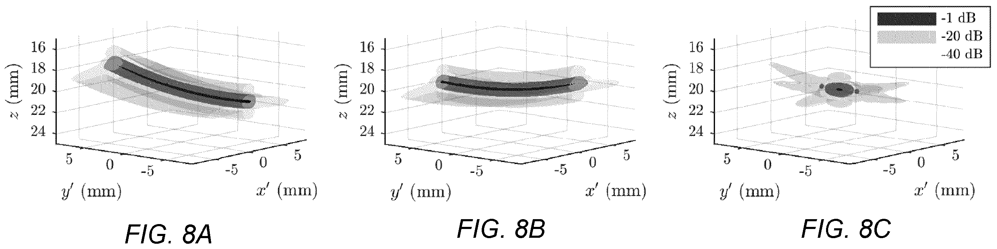

The focusing along the *y'*-axis is further visualized in FIG. 8A-C, which illustrate how volumetric image data obtained for different virtual emitter locations are combined to form a high-resolution volumetric ultrasound image. FIGs. 8A-C illustrate simulated volumetric image data of a point target located at the center of the image volume, in this example at (0; 0; 20) mm. FIGs. 8A-C illustrate how the point target is resolved from an RCA emission sequence consisting of 22 unique virtual emitter locations. The RF-data used to construct the beamformed images shown in FIGs. 8A-C were all acquired using a 3 MHz 64 + 64 RCA in a Field II simulation environment (see e.g. J. A. Jensen, "Field: A program for simulating ultrasound systems," Med. Biol. Eng. Comp., vol. 10th Nordic-Baltic Conference on Biomedical Imaging, Vol. 4, Supplement 1, Part 1, pp. 351-353, 1996 and J. A. Jensen and N. B. Svendsen, "Calculation of pressure fields from arbitrarily shaped, apodized, and excited ultrasound transducers," IEEE Trans. Ultrason., Ferroelec., Freq. Contr., vol. 39, no. 2, pp. 262-267, 1992).

Figs. 8A and 8B illustrate beamformed volumetric image data from two emissions with respective virtual emitter locations. The individual volumetric images from individual emitter locations, are also denoted low-resolution volumetric images (LRV), as they cannot individually visualize the point target placed at the center of the volume resolved in all three dimensions. They resolve the point target as a line instead of a point. Only by combining different LRVs can the point target accurately be represented in all three dimensions, as illustrated by FIG. 8C, which shows a volumetric image obtained by combining 22 LRVs obtained with respective virtual emitter locations. In FIG. 8C, the imaged point scatterer is resolved at the LRV lines' intersection point. The combined image can thus spatially resolve the point target in all three dimensions and are therefore also denoted a high-resolution volumetric image (HRV).

The inventors have realized that the creation of the LRVs can be performed efficiently, because the beamforming operation for creating each of the LRVs does not need to be performed for every image point in the volume to be imaged. It is sufficient to perform the beamforming operation for a representative set of image points, in particular in one image plane. The remaining image values, in particular image values outside the image plane, can then be computed from the image values at the representative set of image points, in particular from the image values in the image plane.

For example, FIGs. 8A-8C illustrate that the LRVs separately only can determine the point target's *y'*-position and that the visualized amplitude is constant along a trajectory in the *y'z*-plane. The trajectory depends on the virtual emitter location, i.e. the trajectory is different for the LRVs shown in FIGs. 8A and 8B, respectively. The trajectories from both LRVs intersect at the point target, and the point target can be resolved, because the LRVs combine coherently at this position. The LRV can be viewed as a "back projection" of the point target's projection onto the *x'z*-plane and the volume is resolved by projecting the volume from different angles. However, instead of acquiring each image point in the LRV independently, various embodiments described herein determine the back projection trajectories and use them to acquire the remaining image points in the volume from the image points of a single *x'z*-plane.

Accordingly, again referring to FIG. 4, the processing pipeline 400 comprises a reconstruction module 420. For each of the 2-D images produced by the beamformer module 410, the reconstruction module determines a set of back-projection trajectories.

The back-projection trajectory for a given 2-D image, i.e. for a given virtual emitter location, can be derived by solving for the trajectory by which the distance (*p̅, xₚ*) , i.e. the distance involving the shortest distance between the virtual emitter location to the image point *̅p̅*̅ and back to the closest position *xₚ* on the receiving aperture, is constant. This solution corresponds, or at least approximates, the solution obtained by dynamic apodization, i.e. with a receiving aperture having width that depends on the depth *zₚ* of the image point relative to the receiving aperture
This trajectory yields the positions in the image volume where the ToF to the closest position on the aperture is constant. This trajectory also corresponds to the positions where the entire ToF-profile is constant relative to the active part of the aperture, if dynamic receive apodization is used; otherwise it is still a good approximation. Assuming *zₚ* ≥ 0 and (*yₚ, zₚ*) ≠ (*yᵥ, zᵥ*), the trajectory can be expressed as *(x'; y'; z)* = *(xₚ; y'; f(y')),* where $f \left(y′\right) = \frac{d \left(\vec{p}, {x}_{p}\right)}{2} - \frac{{\left({y}_{v}-y′\right)}^{2}}{2 d \left(\vec{p}, {x}_{p}\right) - 4 {z}_{v}}$ and where *y'* is constrained to the interval ${y}_{v} - \left|2{z}_{v}-d\left(\vec{p}, {x}_{p}\right)\right| < y ′ < {y}_{v} + \left|2{z}_{v}-d\left(\vec{p}, {x}_{p}\right)\right| .$

The image values along the trajectory are approximately constant, and as a result, it is only necessary to beamform one point on the path. It, therefore, follows that the reconstruction module may, for a given virtual emitter location, compute image values of an entire 3-D LRV image based on image values of a single beamformed *(x'; yₚ; z)*-plane, because any point in the volume can, via the above equation, be mapped to this plane. The mapping (*x',y',z)* → (*x',yₚ,f* (*yₚ*)) can, assuming *(y', z)* ≠ (*yᵥ,zᵥ*), be obtained with the following function: $f \left({y}_{p}\right) = \left\{\begin{matrix}z + \frac{\left(y′-{y}_{p}\right) \left(2{y}_{v}-y′-{y}_{p}\right)}{2 \left({z}_{v}-z+\sqrt{{\left(y′-{y}_{v}\right)}^{2} + {\left(z-{z}_{v}\right)}^{2}}\right)} & if z < {z}_{v} \\ z + \frac{\left(y′-{y}_{p}\right) \left(2{y}_{v}-y′-{y}_{p}\right)}{2 \left({z}_{v}-z-\sqrt{{\left(y′-{y}_{v}\right)}^{2} + {\left(z-{z}_{v}\right)}^{2}}\right)} & otherwise\end{matrix}\right. .$

As this function is independent of *x',* it is only necessary to calculate the mapping for unique *(y';z)*-coordinates. Therefore, assuming the volume is beamformed in a 3-D grid of size *N_{x'} N_{y'} N_{z},* it is only necessary to calculate the mapped positions *N_{x'} N_{z}* times. In contrast, prior art approaches would need to calculate the ToF *N_{x'} N_{y'} N_{z}N* times.

In some embodiments, the location of the image plane along the *y'*-axis is selected differently for different virtual source locations, preferably such that *yₚ = yᵥ,* thus avoiding situations where the intersection of the trajectory lies outside of the domain of the trajectory as defined by the above inequality. Nevertheless, in some embodiments, to determine whether a given point in *(x', y', z)* lies on a trajectory, which is also defined for *y' = yₚ* one may assert that $\left|{y}_{p}-{y}_{v}\right| < \left|2{z}_{v}-d\left(\left(x′,y′,z\right),x′\right)\right| .$

Another option is to assert that *f(yₚ) < zᵥ* if *z < zᵥ* or that *f(yₚ) > zᵥ* if *z > zᵥ.* It is noted that, in some embodiments, the above conditions may not need to be asserted at all, as there may be several options to avoid them. For instance, in one embodiment, the process may derive two image planes, one for each solution in the conditional equation eq. (1). With these two solutions to the image plane the process may subsequently reconstruct two 3-D LRVs. The process may then stitch the two LRVs together at *z* = *zᵥ.* In practice one can also choose to not to consider the domain of *f(y'),* as *zᵥ* is, in ordinary synthetic aperture imaging, far away from the imaging region.

For plane wave imaging, the mapping function can be simplified even further. The simplified expression can be obtained by first taken the derivative of *f(y')* $\frac{df \left(y′\right)}{dy ′} = \frac{- y ′ + {y}_{v}}{d \left(\vec{p}, {x}_{p}\right) - 2 {z}_{v}} .$

Substituting *yᵥ* and *zᵥ* with *r sin(ϕ)* and *-r cos(ϕ),* respectively, and letting *r* → ∞
yields $\frac{df \left(y′\right)}{dy ′} = \frac{sin \left(ϕ\right)}{1 - cos \left(ϕ\right)} = tan \left(\frac{ϕ}{2}\right) .$

Here, *ϕ* denotes the transmit angle and the equation states that the slope's trajectory is half of the slope along the transmitted wave front. Accordingly, the simplified expression for the trajectory is given by $f \left({y}_{p}\right) = z + tan \left(\frac{ϕ}{2}\right) \left({y}_{p}-y′\right) .$

Still referring to FIG. 4, the apparatus may then combine volumetric ultrasound image information from multiple emissions, i.e. for different virtual emitter locations, to obtain a spatially resolved volumetric ultrasound image, also referred to as high-resolution volumetric image, as it has a high spatial resolution in all three spatial directions. To this end, the processing pipeline further comprises a combiner module 430 that receives the series of LRVs computed by the reconstruction module 420 based on the series of beamformed 2-D images produced by the beamformer module 410. The combiner module 430 then combines the LRVs to form a single HRV, e.g. by summing the, optionally weighted, image values of the LRVs at each image point, optionally followed by suitable normalization.

In one variation, at least a part of the processing pipeline 400 is implemented by a separate computing apparatus, different from the console. With this embodiment, RF signals stored in memory and/or beamformed image planes stored in memory can be loaded and processed with the processing pipeline 400 to generate the volumetric images as described herein. Such an apparatus can include a scan converter and display for constructing and visually displaying a representation of a volumetric ultrasound image. Alternatively, or additionally, the volumetric images can be conveyed to the system 102, another ultrasound system, and/or another computer apparatus to construct and visually display a representation of a volumetric ultrasound image or to otherwise process the volumetric ultrasound image.

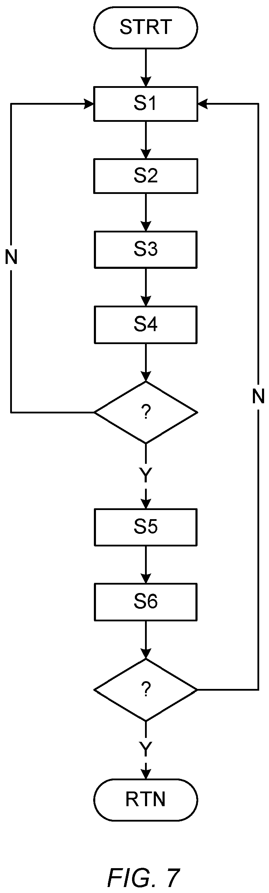

FIG. 7 illustrates an example method in accordance with an embodiment herein.

The ordering of the following acts is for explanatory purposes and is not limiting. As such, one or more of the acts can be performed in a different order, including, but not limited to, concurrently. Furthermore, one or more of the acts may be omitted and/or one or more other acts may be added.

At S1, ultrasound waves are emitted corresponding to a virtual emitter location, as described herein and/or otherwise.

At S2, ultrasound signals are acquired corresponding to the virtual emitter location, as described herein and/or otherwise.

It is to be appreciated that acts S1 and S2 can be omitted. For example, in another instance previously acquired and stored images are retrieved from memory.

At S3, the ultrasound signals are beamformed to produce a 2-D image, as described herein and/or otherwise.

At S4, the remaining 3-D image coordinates are mapped onto the plane of the 2-D image and their image values are interpolated so as to produce a low-resolution volumetric image (LRV) corresponding to the virtual emitter location.

Acts S1 through S4 are repeated for different virtual emitter locations. The number of iterations depends on parameters such as the desired resolution, the desired update frequency, the size of the RCA and/or the like.

When all LRVs have been produced, the process proceeds at S5, where the LRVs are combined into a single high-resolution volumeric image (HRV), as described herein or otherwise.

At S6, the created HRV is displayed and/or stored and/or otherwise processed, as described herein or otherwise. Optionally, image information such as detected objects, dimensions, direction, volume flow, etc., and/or derived quantities can be estimated and visualized.

When additional images are to be produced, the process returns to S1; otherwise the process may terminate.

The above may be implemented by way of computer readable instructions, encoded or embedded on the memory 126 (i.e., the computer readable storage medium, which excludes transitory medium), which, when executed by a computer processor(s) cause the processor(s) to carry out acts described herein. Additionally, or alternatively, at least one of the computer readable instructions is carried by a signal, carrier wave or other transitory medium (which is not computer readable storage medium).

To summarize, various embodiments of the proposed RCA beamformer includes a beamformation step and a reconstruction step. The beamformation step beamforms the *(x'; yₚ; z)* image plane using an RCA beamformer known as such in the art, and the reconstruction step is an interpolation that maps the remaining coordinates onto the plane and interpolates their image value. It is noted that. In some embodiments, the z-axis may be sampled at least at the Nyquist frequency so as to facilitate accurate interpolation in the reconstruction. Alternatively, depending on the interpolation method used, accurate reconstruction may be ensured in another way.

Because the reconstruction step is independent of the number of channels, the beamforming can be performed at the computational complexity of just *O(N_{x'} N_{y'} N_{z}),* i.e. grows with the number of image points in the 3D beamformed volume imaged by the volumetric image, whereas the complexity of prior art approaches is *O(N_{x'} N_{y'} N_{z} N),* i.e. grows with the number of grid points in the 3D beamformed volume times the number of channels in the transducer array. Accordingly, embodiments of the apparatus disclosed herein considerably reduces the computational complexity, in particular for large transducer arrays. Furthermore, in some embodiments, additional reductions of complexity may be achieved if desired. For example, because the trajectories only need to be calculated for each unique *(y'; z)*-coordinate, it may be viable to store the calculated mapping in memory and thus remove the necessity of re-calculating the mapped positions for each of the realizations of the volume. Alternatively, depending on the computational hardware employed, other optimizations may be considered, e.g. the use of a GPU for performing the calculations. Accordingly, in some embodiments, a dynamic calculation of the mapping may be used instead of the storing and re-use of the mapping, thereby reducing the memory requirements.

Lastly, various embodiment of the process disclosed herein also enables efficient, highly-compressed, image storage because the volumes can be recovered by only storing the output from the beamformation step and from the position information, in particular the virtual emitter location.

### Example:

The performance of an embodiment of the proposed RCA beamformation procedure disclosed herein was evaluated through wire and cyst phantom measurements using a cyst phantom designed for 3-D imaging.

The measurements were performed with a Vermon 128 + 128 RCA probe connected to a Verasonics Vantage 256 research scanner, and the simulations uses the same transducer and sequence parameters. The parameters used for these measurements include:
- No. elements: 128+128
- Center frequency: 6 MHz
- Cycles in transmit pulse: 2
- Speed of sound: 1540 m/s
- Element pitch: 0.27 mm
- Emissions per image: 192
- Pulse repetition frequency: 500 Hz
- Transmit/receive apodization: von Hann
- No. active elements: 32
- Transmit/receive F-number: -1/1
- Sampling frequency: 31.25 MHz.

The imaging sequence used 96 defocused row emissions and 96 defocused column emissions, emitted with a sliding aperture of 32 elements. The transmit and receive F-number was set to -1 and 1, and the RF data was acquired with a sampling rate of 31.25 MHz. Lastly, the beamformation of the *(x'; yₚ; z)*-plane was performed at *yₚ = yᵥ.* The full 3-D reconstruction from this plane was performed using spline interpolation.

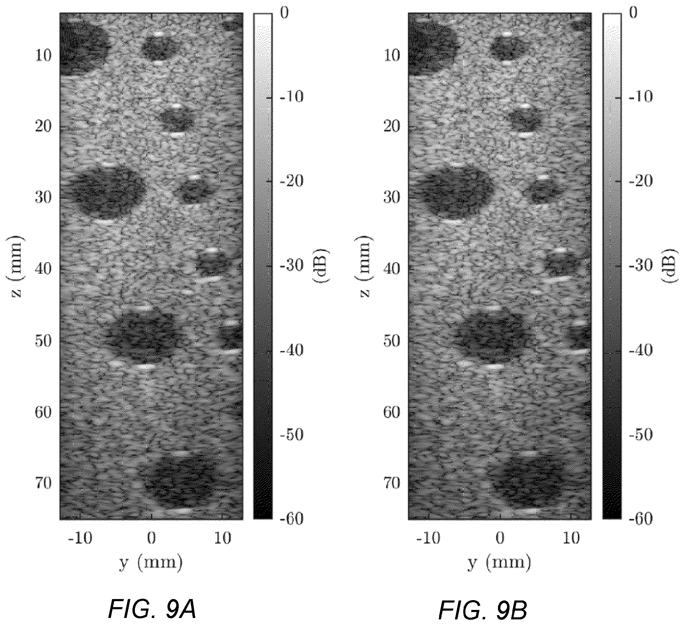

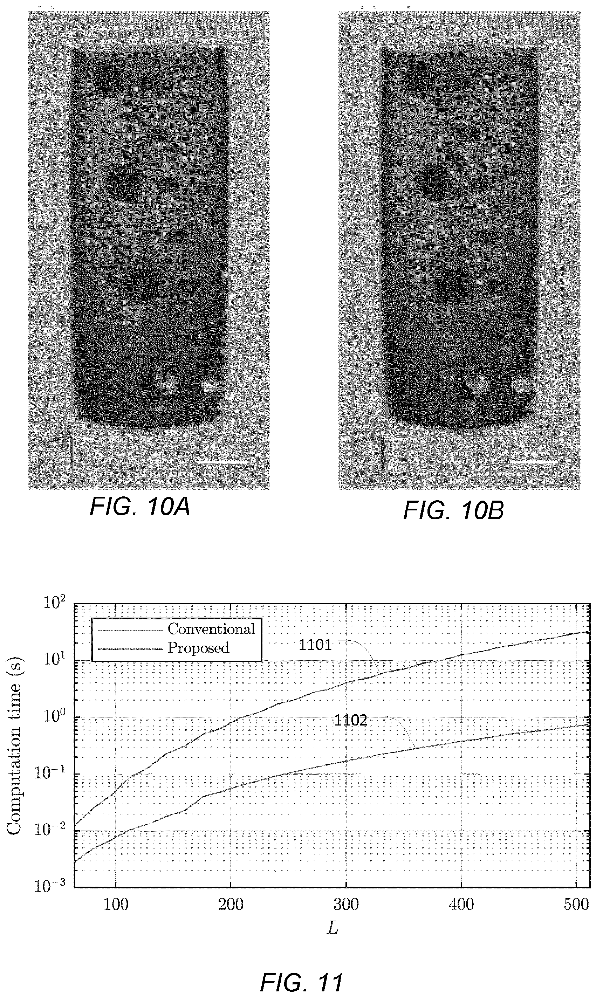

FIG. 9A shows a 2-D slice of the volumetric B-mode image performed with a prior art beamforming method while FIG. 9B shows a 2-D slice of the volumetric B-mode image performed by an embodiment of the beamformation method disclosed herein. FIG. 10A shows a 3-D rendering of the volumetric B-mode image performed with a prior art beamforming method while FIG. 10B shows a 3-D rendering of the volumetric B-mode image performed by an embodiment of the beamformation method disclosed herein. As can be seen from FIGs. 9A-B and 10A-B, the output from the two beamformers is visually indistinguishable. The beamformed volumes correlation coefficient was computed to be 99.80%.

The computational complexity of both beamformation methods was evaluated by plotting the average LRV beamformation time from 10 realizations against increasing values of *L = Nₓ = N_{y} = N_{z} = N.* This means that the number of channels and samples in the beamformed volume's side lengths are increased simultaneously in the analysis. It is also assumed that the axial sampling rate of the *NₓN_{y}N_{z}* volume is sufficient for the proposed method.

The prior art RCA beamformation was performed using the CUDA C/C++ implementation of the RCA beamformer presented in M. B. Stuart, P. M. Jensen, J. T. R. Olsen, A. B. Kristensen, M. Schou, B. Dammann, H. H. B. Sørensen, and J. A. Jensen, "Real-time volumetric synthetic aperture software beamforming of row-column probe data," IEEE Trans. Ultrason., Ferroelec., Freq. Contr., vol. 68, no. 8, pp. 2608-2618, 2021. The reconstruction step was performed, without GPU acceleration, using MATLAB's built-in interpolation functions. The interpolation method used for the RCA beamformer was a cubic interpolation, and the full 3-D reconstruction was, as previously mentioned, implemented with spline interpolation. Lastly, both the prior art and the proposed methods were evaluated on a computer with an NVIDIA Quadro RTX 5000 graphics card and a 2.90 GHz Intel Xeon Gold 6226R CPU.

FIG. 11 shows a comparison of computation time as a function of the number of samples and channels in the receiving aperture. The results assume that the beamformation step and reconstruction step contain approximately the same number of samples along the axial side length. This assumption requires that *N_{z}* in the final beamformed volume is higher than or equal to the sampling rate used during the beamformation step. Graph 1101 shows the computation time for a prior art RCA beamformer while graph 1102 shows the computation time for the method proposed herein. As *L* increases, the computation time of the prior art RCA beamformer rapidly diverges from the computation time of the proposed RCA beamformer. For example, at *L* = 64, the computation time of the prior approach is 12.31 ms, whereas the proposed method achieves the beamformation in 2.82 ms. At *L* = 500, the computation time from the prior art approach is 32:15 s, whereas the proposed method performs the beamformation in 0.75 s. Also, in another more realistic test, the proposed beamformer was, from data acquired with a 128+128 RCA, able to beamform a *NₓN_{y}N_{z}* = *192 x 192 x 2000* LRV in 0:42 s, whereas the prior art beamformer processed the volume in 3:36 s.

The application has been described with reference to various embodiments. Modifications and alterations will occur to others upon reading the application. It is intended that the invention be construed as including all such modifications and alterations, including insofar as they come within the scope of the appended claims.

## Claims

1. An ultrasound imaging apparatus for providing a volumetric ultrasound image of an image volume, wherein the ultrasound imaging apparatus comprises:
a) a row-column addressed transducer array (114) configured to convert excitation electrical pulses into an ultrasound pressure field and to convert received ultrasound echo pressure fields into echo signals, wherein the row-column addressed transducer array comprises a first set of transducer elements (116) and a second set of transducer elements (116) , the first set of transducer elements defining a first transducer array arranged along a first axis, the second set of transducer elements defining a second transducer array arranged along a second axis, wherein the ultrasound imaging apparatus is configured to control the row-column addressed transducer array to make a plurality of ultrasonic emissions corresponding to ultrasound emitted from respective virtual emitter locations;
b) a beamformer module (410) to beamform echo signals received from the row-column addressed transducer array responsive to the emissions to produce a corresponding plurality of two-dimensional images, each two-dimensional image corresponding to one of the virtual emitter locations; wherein the beamformer module is configured to beamform the echo signals using dynamic receive focusing to produce respective image values at a first set of image points (530) within the image volume;
c) a reconstruction module (420) configured to determine a set of trajectories, each trajectory intersecting an image point of the first set of image points, wherein each of the determined trajectories is defined in dependence of a virtual emitter location (510),
wherein the beamformer module and the reconstruction module are configured to compute a plurality of low-resolution volumetric images, each low-resolution volumetric image corresponding to a respective virtual emitter location, and wherein the image apparatus further comprises:
d) an image combiner module (430) configured to combine the plurality of low-resolution volumetric images corresponding to different virtual emitter locations into a combined high-resolution volumetric image having a spatial resolution higher than the low-resolution volumetric images;
**characterized in that** the reconstruction module is configured to compute at least a first low-resolution volumetric image of the plurality of low-resolution volumetric images, the first low-resolution image corresponding to a first virtual emitter location by at least:
- determining a first set of trajectories to the first virtual emitter location,
- map image coordinates of the image volume onto image positions of a first two-dimensional image using the first set of trajectories, and to
- interpolate the image values at the mapped image coordinates from the image values of the first two-dimensional image plane, the interpolated image values at the mapped image coordinates representing the first low-resolution volumetric image;
and that the reconstruction module is configured to determine each trajectory of the set of trajectories as a set of positions within the image volume where a time-of-flight from a virtual emitter location, via any one of the set of positions along said trajectory, to a closest position on an aperture of a receiving one of the first and second transducer arrays is constant along said trajectory.

2. The ultrasound imaging apparatus according to claim 1, comprising a probe (104) and a console (106), operatively coupled to the probe, wherein the probe comprises the row-column addressed transducer array.

3. The ultrasound imaging apparatus according to any one of the preceding claims, comprising a transmit circuit (118) configured to generate the excitation electrical pulses so as to cause the row-column addressed transducer array to emit an emission sequence of ultrasound pressure fields corresponding to respective virtual emitter locations.

4. The ultrasound imaging apparatus according to any one of the preceding claims, configured to transmit ultrasound waves by the first transducer array, and to receive backscattered ultrasound waves by the first or second transducer array.

5. The ultrasound imaging apparatus according to any one of the preceding claims, wherein the reconstruction module is configured to map each image coordinate of the image volume onto an image point of the first set, and to store a representation of the mapped image coordinates, and wherein the reconstruction module is configured to compute a plurality of volumetric images using the stored representation of the mapped image coordinates.

6. The ultrasound imaging apparatus according to any one of the preceding claims, wherein the beamformer module is configured to perform delay-and-sum beamforming.

7. The ultrasound imaging apparatus according to any one of the preceding claims, wherein beamforming the echo signals using dynamic receive focusing comprises, for each image point of the first set of image points, computing a time-of-flight along a shortest path from a virtual emitter location (510) to the image point (530) and further from the image point to a receiving transducer element (521) of the row-column addressed transducer array.

8. The ultrasound imaging apparatus according to any one of the preceding claims, wherein the first set of image points define an image plane of a two-dimensional image within the image volume.

9. The ultrasound imaging apparatus according to claim 8, wherein the image plane is a plane extending out of, in particular orthogonal to, a plane defined by the row-column addressed transducer array.

10. The ultrasound imaging apparatus according to any one of claims 8 through 9, wherein the image plane is a plane orthogonal to a longitudinal direction of a receiving transducer element of the row-column addressed transducer array.

11. A computer-implemented method, comprising:
- receiving echo signals from a row-column addressed transducer array (114) , the row-column addressed transducer array being configured to convert excitation electrical pulses into an ultrasound pressure field and to convert received ultrasound echo pressure fields into echo signals, the row-column addressed transducer array comprising a first set of transducer elements (116) and a second set of transducer elements (116), the first set of transducer elements defining a first transducer array arranged along a first axis, the second set of transducer elements defining a second transducer array arranged along a second axis, the echo signals being representative of ultrasound echo pressure fields received by the row-column addressed transducer array responsive to emitting an ultrasound pressure field, wherein the row-column addressed transducer array is controlled to make a plurality of ultrasonic emissions corresponding to ultrasound emitted from respective virtual emitter locations,
- beamforming echo signals received from the row-column addressed transducer array responsive to the emissions to produce a corresponding plurality of two-dimensional images, each two-dimensional image corresponding to one of the virtual emitter locations, wherein the beamforming of the received echo signals uses dynamic receive focusing to produce respective image values at a first set of image points within the image volume,
- determining a set of trajectories, each trajectory intersecting an image point of the first set of image points,
- computing a plurality of low-resolution volumetric images, each low-resolution volumetric image corresponding to a respective virtual emitter location, and
- combining the plurality of low-resolution volumetric images corresponding to different virtual emitter locations into a combined high-resolution volumetric image having a spatial resolution higher than the low-resolution volumetric images;
**characterized in that** computing at least a first low-resolution volumetric image of the plurality of low-resolution volumetric images, the first low-resolution image corresponding to a first virtual emitter location, comprises:
- determining a first set of trajectories to the first virtual emitter location,
- map image coordinates of the image volume onto image positions of a first two-dimensional image using the first set of trajectories, and to
- interpolate image values at the mapped image coordinates from image values of the first two-dimensional image plane, the interpolated image values at the mapped image coordinates representing the first low-resolution volumetric image;
and that each trajectory of the set of trajectories is determined as a set of positions within the image volume where a time-of-flight from a virtual emitter location, via any one of the set of positions along said trajectory, to a closest position on an aperture of a receiving one of the first and second transducer arrays is constant along said trajectory.

12. A computer program comprising instructions that, when executed by a data processing system, cause the data processing system (124) to perform the steps of the method according to claim 11.

13. A data processing system (124) configured to perform the steps of the method according to claim 11.

## Patentansprüche

1. Ultraschallbildgebungseinrichtung zum Bereitstellen eines volumetrischen Ultraschallbildes eines Bildvolumens, wobei die Ultraschallbildgebungseinrichtung umfasst:
a) ein zeilen- und spaltenweise adressiertes Wandlerarray (114), das so konfiguriert ist, dass es elektrische Anregungsimpulse in ein Ultraschall-Druckfeld umwandelt und empfangene Ultraschall-Echo-Druckfelder in Echosignale umwandelt, wobei das zeilen- und spaltenweise adressierte Wandlerarray einen ersten Satz von Wandlerelementen (116) und einen zweiten Satz von Wandlerelementen (116) umfasst, wobei der erste Satz von Wandlerelementen ein erstes Wandlerarray entlang einer ersten Achse definiert, der zweite Satz von Wandlerelementen ein zweites Wandlerarray entlang einer zweiten Achse definiert, wobei die Ultraschallbildgebungseinrichtung so konfiguriert ist, dass sie das zeilen- und spaltenweise adressierte Wandlerarray steuert, um eine Vielzahl von Ultraschallemissionen zu erzeugen, die dem von jeweiligen virtuellen Emitterpositionen ausgesendeten Ultraschall entsprechen;
b) ein Strahlformer-Modul (410) zum Strahlformen von Echosignalen, die von dem zeilen- und spaltenweise adressierten Wandlerarray als Reaktion auf die Emissionen empfangen werden, um eine entsprechende Vielzahl zweidimensionaler Bilder zu erzeugen, wobei jedes zweidimensionale Bild einer der virtuellen Emitterpositionen entspricht; wobei das Strahlformer-Modul so konfiguriert ist, dass es die Echosignale unter Verwendung dynamischer Empfangsfokussierung strahlformt, um an einem ersten Satz von Bildpunkten (530) innerhalb des Bildvolumens entsprechende Bildwerte zu erzeugen;
c) ein Rekonstruktionsmodul (420), das so konfiguriert ist, dass es einen Satz von Trajektorien bestimmt, wobei jede Trajektorie einen Bildpunkt des ersten Satzes von Bildpunkten schneidet, wobei jede der bestimmten Trajektorien in Abhängigkeit von einer virtuellen Emitterposition (510) definiert ist,
wobei das Strahlformer-Modul und das Rekonstruktionsmodul so konfiguriert sind, dass sie eine Vielzahl von niedrigauflösenden volumetrischen Bildern berechnen, wobei jedes niedrigauflösende volumetrische Bild einer jeweiligen virtuellen Emitterposition entspricht, und wobei die Bildgebungseinrichtung weiter umfasst:
d) ein Bildkombinationsmodul (430), das so konfiguriert ist, dass es die Vielzahl von niedrigauflösenden volumetrischen Bildern, die verschiedenen virtuellen Emitterpositionen entsprechen, zu einem kombinierten hochauflösenden volumetrischen Bild kombiniert, das eine räumliche Auflösung aufweist, die höher ist als die der niedrigauflösenden volumetrischen Bilder;
**dadurch gekennzeichnet, dass** das Rekonstruktionsmodul so konfiguriert ist, dass es mindestens ein erstes niedrigauflösendes volumetrisches Bild aus der Vielzahl niedrigauflösender volumetrischer Bilder, wobei das erste niedrigauflösende Bild einer ersten virtuellen Emitterposition entspricht, berechnet durch mindestens:
- Bestimmen eines ersten Satzes von Trajektorien zur ersten virtuellen Emitterposition,
- Abbilden von Bildkoordinaten des Bildvolumens unter Verwendung des ersten Satzes von Trajektorien auf Bildpositionen eines ersten zweidimensionalen Bildes und
- Interpolieren der Bildwerte an den abgebildeten Bildkoordinaten aus den Bildwerten der ersten zweidimensionalen Bildebene, wobei die interpolierten Bildwerte an den abgebildeten Bildkoordinaten das erste niedrigauflösende volumetrische Bild darstellen;
und dass das Rekonstruktionsmodul so konfiguriert ist, dass es jede Trajektorie des Satzes von Trajektorien als einen Satz von Positionen innerhalb des Bildvolumens bestimmt, bei denen eine Laufzeit von einer virtuellen Emitterposition über eine beliebige des Satzes von Positionen entlang der Trajektorie bis zu einer nächstgelegenen Position auf einer Apertur eines der ersten und zweiten Wandlerarrays entlang der Trajektorie konstant ist.

2. Ultraschallbildgebungseinrichtung nach Anspruch 1, umfassend eine Sonde (104) und eine Konsole (106), die mit der Sonde funktionell verbunden ist, wobei die Sonde das zeilen- und spaltenweise adressierte Wandlerarray umfasst.

3. Ultraschallbildgebungseinrichtung nach einem der vorstehenden Ansprüche, umfassend eine Sendeschaltung (118), die so konfiguriert ist, dass sie die elektrischen Anregungsimpulse erzeugt, um zu bewirken, dass das zeilen- und spaltenweise adressierte Wandlerarray eine Emissionssequenz von Ultraschall-Druckfeldern aussendet, die jeweiligen virtuellen Emitterpositionen entsprechen.

4. Ultraschallbildgebungseinrichtung nach einem der vorstehenden Ansprüche, die so konfiguriert ist, dass sie Ultraschallwellen durch das erste Wandlerarray sendet und rückgestreute Ultraschallwellen durch das erste oder zweite Wandlerarray empfängt.

5. Ultraschallbildgebungseinrichtung nach einem der vorstehenden Ansprüche, wobei das Rekonstruktionsmodul so konfiguriert ist, dass es jede Bildkoordinate des Bildvolumens auf einen Bildpunkt des ersten Satzes abbildet und eine Darstellung der abgebildeten Bildkoordinaten speichert, und wobei das Rekonstruktionsmodul so konfiguriert ist, dass es eine Vielzahl von volumetrischen Bildern unter Verwendung der gespeicherten Darstellung der abgebildeten Bildkoordinaten berechnet.

6. Ultraschallbildgebungseinrichtung nach einem der vorstehenden Ansprüche, wobei das Strahlformer-Modul zum Durchführen von Delay-and-Sum-Strahlformen konfiguriert ist.

7. Ultraschallbildgebungseinrichtung nach einem der vorstehenden Ansprüche, wobei Strahlformen der Echosignale unter Verwendung dynamischer Empfangsfokussierung für jeden Bildpunkt des Satzes von Bildpunkten Berechnen einer Laufzeit entlang des kürzesten Weges von einer virtuellen Emitterposition (510) zu dem Bildpunkt (530) und weiter vom Bildpunkt zu einem Empfangswandlerelement (521) des zeilen- und spaltenweise adressierten Wandlerarrays umfasst.

8. Ultraschallbildgebungseinrichtung nach einem der vorstehenden Ansprüche, wobei der erste Satz von Bildpunkten eine Bildebene eines zweidimensionalen Bildes innerhalb des Bildvolumens definiert.

9. Ultraschallbildgebungseinrichtung nach Anspruch 8, wobei die Bildebene eine Ebene ist, die sich aus einer durch das zeilen- und spaltenweise adressierte Wandlerarray definierten Ebene heraus, insbesondere orthogonal zu dieser, erstreckt.

10. Ultraschallbildgebungseinrichtung nach einem der Ansprüche 8 bis 9, wobei die Bildebene eine Ebene ist, die orthogonal zu einer Längsrichtung eines empfangenden Wandlerelements des zeilen- und spaltenweise adressierten Wandlerarrays verläuft.

11. Computerimplementiertes Verfahren, umfassend:
- Empfangen von Echosignalen von einem zeilen- und spaltenweise adressierten Wandlerarray (114), wobei das zeilen- und spaltenweise adressierte Wandlerarray so konfiguriert ist, dass es elektrische Anregungsimpulse in ein Ultraschall-Druckfeld umwandelt und empfangene Ultraschall-Echo-Druckfelder in Echosignale umwandelt, wobei das zeilen- und spaltenweise adressierte Wandlerarray einen ersten Satz von Wandlerelementen (116) und einen zweiten Satz von Wandlerelementen (116) umfasst, wobei der erste Satz von Wandlerelementen ein erstes Wandlerarray entlang einer ersten Achse definiert, der zweite Satz von Wandlerelementen ein zweites Wandlerarray entlang einer zweiten Achse definiert, wobei die Echosignale repräsentativ für Ultraschall-Echo-Druckfelder sind, die vom zeilen- und spaltenweise adressierten Wandlerarray als Reaktion auf Aussenden eines Ultraschall-Druckfeldes empfangen werden, wobei das zeilen- und spaltenweise adressierte Wandlerarray so gesteuert wird, dass es eine Vielzahl von Ultraschallemissionen erzeugt, die dem von jeweiligen virtuellen Emitterpositionen ausgesendeten Ultraschall entsprechen,
- Strahlformen von Echosignalen, die von dem zeilen- und spaltenweise adressierten Wandlerarray empfangen werden, in Reaktion auf die Emissionen, um eine entsprechende Vielzahl zweidimensionaler Bilder zu erzeugen, wobei jedes zweidimensionale Bild einer der virtuellen Emitterpositionen entspricht, wobei das Strahlformen der empfangenen Echosignale eine dynamische Empfangsfokussierung verwendet, um an einem ersten Satz von Bildpunkten innerhalb des Bildvolumens entsprechende Bildwerte zu erzeugen,
- Bestimmen eines Satzes von Trajektorien, wobei jede Trajektorie einen Bildpunkt des ersten Satzes von Bildpunkten schneidet,
- Berechnen einer Vielzahl von niedrigauflösenden volumtrischen Bildern, wobei jedes niedrigauflösende volumtrische Bild einer jeweiligen virtuellen Emitterposition entspricht, und
- Kombinieren der Vielzahl niedrigauflösender volumetrischer Bilder, die verschiedenen virtuellen Emitterpositionen entsprechen, zu einem kombinierten hochauflösenden volumetrischen Bild, das eine räumliche Auflösung aufweist, die höher ist als die der niedrigauflösenden volumetrischen Bilder;
**dadurch gekennzeichnet, dass** Berechnen mindestens eines ersten niedrigauflösenden volumetrischen Bildes aus der Vielzahl niedrigauflösender volumetrischer Bilder, wobei das erste niedrigauflösende Bild einer ersten virtuellen Emitterposition entspricht, umfasst:
- Bestimmen eines ersten Satzes von Trajektorien zur ersten virtuellen Emitterposition,
- Abbilden von Bildkoordinaten des Bildvolumens unter Verwendung des ersten Satzes von Trajektorien auf Bildpositionen eines ersten zweidimensionalen Bildes und
- Interpolieren von Bildwerten an den abgebildeten Bildkoordinaten aus Bildwerten der ersten zweidimensionalen Bildebene, wobei die interpolierten Bildwerte an den abgebildeten Bildkoordinaten das erste niedrigauflösende volumetrische Bild darstellen;
und dass jede Trajektorie des Satzes von Trajektorien als ein Satz von Positionen innerhalb des Bildvolumens bestimmt wird, bei denen eine Laufzeit von einer virtuellen Emitterposition über eine beliebige des Satzes von Positionen entlang der Trajektorie bis zu einer nächstgelegenen Position auf einer Apertur eines der ersten und zweiten Wandlerarrays entlang der Trajektorie konstant ist.

12. Computerprogramm, das Anweisungen umfasst, die, wenn sie von einem Datenverarbeitungssystem ausgeführt werden, das Datenverarbeitungssystem (124) veranlassen, die Schritte des Verfahrens nach Anspruch 11 durchzuführen.

13. Datenverarbeitungssystem (124), das so konfiguriert ist, dass es die Schritte des Verfahrens nach Anspruch 11 durchführt.

## Revendications

1. Appareil d'imagerie par ultrasons pour fournir une image ultrasonore volumétrique d'un volume image, dans lequel appareil d'imagerie par ultrasons comprend :
a) un réseau de transducteurs adressés en rangée-colonne (114) configuré pour convertir des impulsions électriques d'excitation en un champ de pression ultrasonore et pour convertir des champs de pression d'écho ultrasonore reçus en signaux d'écho, dans lequel le réseau de transducteurs adressés en rangée-colonne comprend un premier ensemble d'éléments transducteurs (116) et un second ensemble d'éléments transducteurs (116), le premier ensemble d'éléments transducteurs définissant un premier réseau de transducteurs agencé le long d'un premier axe, le second ensemble d'éléments transducteurs définissant un second réseau de transducteurs agencé le long d'un second axe, dans lequel l'appareil d'imagerie par ultrasons est configuré pour commander le réseau de transducteurs adressés en rangée-colonne pour réaliser une pluralité d'émissions ultrasonores correspondant aux ultrasons émis à partir d'emplacements d'émetteurs virtuels respectifs ;
b) un module de formation de faisceau (410) pour former des faisceaux de signaux d'écho reçus du réseau de transducteurs adressés en rangée et colonne, en réponse aux émissions, pour produire une pluralité correspondante d'images bidimensionnelles, chaque image bidimensionnelle correspondant à l'un des emplacements d'émetteur virtuel ; dans lequel le module de formation de faisceau est configuré pour former les faisceaux de signaux d'écho à l'aide d'une focalisation de réception dynamique pour produire des valeurs d'image respectives à un premier ensemble de points d'image (530) dans le volume d'image ;
c) un module de reconstruction (420) configuré pour déterminer un ensemble de trajectoires, chaque trajectoire croisant un point d'image du premier ensemble de points d'image, dans lequel chacune des trajectoires déterminées est définie en fonction d'un emplacement d'émetteur virtuel (510),
dans lequel le module de formation de faisceau et le module de reconstruction sont configurés pour calculer une pluralité d'images volumiques à basse résolution, chaque image volumique à basse résolution correspondant à un emplacement d'émetteur virtuel respectif, et dans lequel le dispositif d'imagerie comprend en outre :
d) un module de combinaison d'images (430) configuré pour combiner la pluralité d'images volumétriques à basse résolution correspondant à différents emplacements d'émetteur virtuel en une image volumétrique à haute résolution combinée présentant une résolution spatiale supérieure à celle des images volumétriques à basse résolution ;
**caractérisé en ce que** le module de reconstruction est configuré pour calculer au moins une première image volumétrique à basse résolution de la pluralité d'images volumétriques à basse résolution, la première image basse résolution correspondant à un premier emplacement d'émetteur virtuel par au moins :
- la détermination d'un premier ensemble de trajectoires vers le premier emplacement d'émetteur virtuel,
- le mappage de coordonnées d'image du volume d'image sur des positions d'image d'une première image bidimensionnelle à l'aide du premier ensemble de trajectoires, et pour
- interpoler les valeurs de l'image aux coordonnées de l'image mappée à partir des valeurs d'image du premier plan d'image bidimensionnel, les valeurs d'image interpolées aux coordonnées d'image mappée représentant la première image volumétrique à basse résolution ;
et que le module de reconstruction est configuré pour déterminer chaque trajectoire de l'ensemble des trajectoires comme un ensemble de positions dans le volume d'image lorsqu'un temps de vol depuis un emplacement d'émetteur virtuel, via l'une quelconque de l'ensemble de positions le long de ladite trajectoire, jusqu'à la position la plus proche sur une ouverture d'un transducteur de réception des premier et second réseaux de transducteurs est constant le long de ladite trajectoire.

2. Appareil d'imagerie par ultrasons selon la revendication 1, comprenant une sonde (104) et une console (106), couplée de manière fonctionnelle à la sonde, dans lequel la sonde comprend le réseau de transducteurs adressés en rangée-colonne.

3. Appareil d'imagerie par ultrasons selon l'une quelconque des revendications précédentes, comprenant un circuit de transmission (118) configuré pour générer les impulsions électriques d'excitation de manière à amener le réseau de transducteurs adressés en rangée-colonne à émettre une séquence d'émission de champs de pression ultrasonore correspondant à des emplacements d'émetteur virtuel respectifs.

4. Appareil d'imagerie par ultrasons selon l'une quelconque des revendications précédentes, configuré pour transmettre des ondes ultrasonores par le premier réseau de transducteurs et pour recevoir des ondes ultrasonores rétrodiffusées par le premier ou le second réseau de transducteurs.

5. Appareil d'imagerie par ultrasons selon l'une quelconque des revendications précédentes, dans lequel le module de reconstruction est configuré pour mapper chaque coordonnée d'image du volume d'image sur un point d'image du premier ensemble, et pour stocker une représentation des coordonnées d'image mappées, et dans lequel le module de reconstruction est configuré pour calculer une pluralité d'images volumétriques à l'aide de la représentation stockée des coordonnées d'image mappées.

6. Appareil d'imagerie par ultrasons selon l'une quelconque des revendications précédentes, dans lequel le module de formation de faisceau est configuré pour effectuer une formation de faisceau par sommation et retard.

7. Appareil d'imagerie par ultrasons selon l'une quelconque des revendications précédentes, dans lequel la formation de faisceau des signaux d'écho à l'aide d'une focalisation de réception dynamique comprend, pour chaque point d'image du premier ensemble de points d'image, le calcul d'un temps de vol le long du chemin le plus court depuis un emplacement d'émetteur virtuel (510) jusqu'au point d'image (530) et plus loin du point d'image jusqu'à un élément de transducteur de réception (521) du réseau de transducteurs adressés en rangée-colonne.

8. Appareil d'imagerie par ultrasons selon l'une quelconque des revendications précédentes, dans lequel le premier ensemble de points d'image définit un plan d'image d'une image bidimensionnelle à l'intérieur du volume d'image.

9. Appareil d'imagerie par ultrasons selon la revendication 8, dans lequel le plan image est un plan s'étendant hors d'un plan défini, en particulier orthogonal à celui-ci, par le réseau de transducteurs adressés en rangée-colonne.

10. Appareil d'imagerie par ultrasons selon l'une quelconque des revendications 8 à 9, dans lequel le plan image est un plan orthogonal à une direction longitudinale d'un élément de transducteur de réception du réseau de transducteurs adressés en rangée-colonne.

11. Procédé mis en œuvre par ordinateur, comprenant :
- la réception de signaux d'écho en provenance d'un réseau de transducteurs adressés en rangée-colonne (114), le réseau de transducteurs adressés en rangée-colonne étant configuré pour convertir des impulsions électriques d'excitation en un champ de pression ultrasonore et pour convertir des champs de pression d'écho ultrasonore reçus en signaux d'écho, le réseau de transducteurs adressés en rangée-colonne comprenant un premier ensemble d'éléments transducteurs (116) et un second ensemble d'éléments transducteurs (116), le premier ensemble d'éléments transducteurs définissant un premier réseau de transducteurs agencé le long d'un premier axe, le second ensemble d'éléments transducteurs définissant un second réseau de transducteurs agencé le long d'un second axe, les signaux d'écho étant représentatifs de champs de pression d'écho ultrasonore reçus par le réseau de transducteurs adressés en rangée-colonne en réponse à l'émission d'un champ de pression ultrasonore, dans lequel le réseau de transducteurs adressés en rangée-colonne est commandé pour réaliser une pluralité d'émissions ultrasonores correspondant à des ultrasons émis depuis des emplacements d'émetteurs virtuels respectifs,
- la formation de faisceaux de signaux d'écho reçus du réseau de transducteurs adressés en rangée et colonne, en réponse aux émissions, pour produire une pluralité correspondante d'images bidimensionnelles, chaque image bidimensionnelle correspondant à l'un des emplacements d'émetteur virtuel ; dans lequel la formation des faisceaux des signaux d'écho reçus utilise une focalisation de réception dynamique pour produire des valeurs d'image respectives à un premier ensemble de points d'image dans le volume d'image,
- la détermination d'un ensemble de trajectoires, chaque trajectoire croisant un point d'image du premier ensemble de points images,
- le calcul d'une pluralité d'images volumétriques à basse résolution, chaque image volumétrique à basse résolution correspondant à un emplacement d'émetteur virtuel respectif, et
- la combinaison de la pluralité d'images volumétriques à basse résolution correspondant à différents emplacements d'émetteur virtuel en une image volumétrique combinée à haute résolution présentant une résolution spatiale supérieure à celle des images volumétriques à basse résolution ;
**caractérisé en ce que** le calcul d'au moins une première image volumétrique à basse résolution de la pluralité d'images volumétriques à basse résolution, la première image à basse résolution correspondant à un premier emplacement d'émetteur virtuel, comprend :
- la détermination d'un premier ensemble de trajectoires vers le premier emplacement d'émetteur virtuel,
- le mappage de coordonnées d'image du volume image sur des positions d'image d'une première image bidimensionnelle à l'aide du premier ensemble de trajectoires, et à
- l'interpolation de valeurs de l'image aux coordonnées d'image mappées à partir de valeurs d'image du premier plan d'image bidimensionnel, les valeurs d'image interpolées aux coordonnées d'image mappées représentant la première image volumétrique à basse résolution ;
et que chaque trajectoire de l'ensemble des trajectoires est déterminée comme un ensemble de positions dans le volume de l'image où un temps de vol depuis un emplacement d'émetteur virtuel, via l'une quelconque des positions le long de ladite trajectoire, jusqu'à la position la plus proche sur une ouverture d'un transducteur de réception des premier et second réseaux de transducteurs est constant le long de ladite trajectoire.

12. Programme informatique comprenant des instructions qui, lorsqu'elles sont exécutées par un système de traitement de données, amènent le système de traitement de données (124) à effectuer les étapes du procédé selon la revendication 11.

13. Système de traitement de données (124) configuré pour effectuer les étapes du procédé selon la revendication 11.
